# FASCICULE DE BREVET EUROPEEN

(11) **EP 0 844 710 B1**
(45) Date de publication et mention de la délivrance du brevet: **26.01.2005**
(21) Numéro de dépôt: 97402767.4
(22) Date de dépôt: 18.11.1997
(51) Int. Cl.: H02B 1/44

(54) **Coffret, notamment pour appareils électriques**
Gehäuse für elektrische Geräte
Casing for electrical apparatus

(30) Priorité: 26.11.1996 FR 9614437
(43) Date de publication de la demande: 27.05.1998
(73) Titulaire: LEGRAND, 87000 Limoges (FR); LEGRAND SNC, 87000 Limoges (FR)
(72) Inventeur: Combas, Christian, 87240 Ambazac (FR); Coste, Gilles, 87350 Panazol (FR)
(74) Mandataire: Santarelli

(56) Documents cités:
- EP-A- 0 079 036
- EP-A- 0 448 907
- DE-A- 19 507 406
- FR-A- 2 717 633
- FR-A- 2 719 736
- GB-A- 2 134 591

## Description

La présente invention concerne d'une manière générale les coffrets du type de ceux destinés par exemple au logement d'appareils électriques.

Ils comportent usuellement une porte articulée par des gonds à un dormant solidaire de leur bâti.

Lorsque la porte présente une hauteur relativement importante, et cela peut être le cas lorsque les appareils électriques à loger sont disposés en plusieurs rangées, il est nécessaire, pour éviter un bâillement intempestif de cette porte entre ses gonds, de prévoir, en position intermédiaire entre ceux-ci, une articulation supplémentaire.

A ce jour, cette articulation supplémentaire implique de mettre en oeuvre, sur le dormant et/ou sur la porte, une pièce particulière, qui, distincte de ce dormant et/ou de cette porte, est à rapporter sur celui-ci et/ou sur celle-ci.

Cela est le cas, notamment, dans le brevet FR-A1-2 717 633.

La disposition correspondante donne satisfaction.

Mais, du fait même du coût propre de la pièce particulière à mettre en oeuvre, et des frais de montage de celle-ci, elle est relativement dispendieuse.

Il en est d'autant plus ainsi, en l'espèce, que la pièce supplémentaire à mettre en oeuvre est un charnon à rapporter sur le dormant, et que, pour coopération avec un charnon complémentaire prévu à cet effet sur la porte, il faut lui adjoindre une broche, ce qui complique encore le montage de l'ensemble.

La présente invention a d'une manière générale pour objet une disposition permettant d'obtenir à coût plus réduit l'articulation supplémentaire recherchée et conduisant en outre à d'autres avantages.

De manière plus précise, elle a pour objet un coffret du genre comportant une porte articulée par des gonds à un dormant, ce coffret étant d'une manière générale caractérisé en ce que, entre les gonds, la porte présente, d'un seul tenant, sur sa tranche, au moins une fourchette par laquelle elle est en prise à rotation avec un axe qui est lui-même d'un seul tenant avec le dormant.

Ainsi, pour l'articulation supplémentaire recherchée, aucune pièce particulière n'est à rapporter ni sur la porte ni sur le dormant.

Au contraire, les constituants de cette articulation viennent directement de fabrication avec la porte et le dormant.

Il en résulte, avantageusement, une minimisation des investissements nécessaires à la fabrication du coffret et des coûts propres à cette fabrication.

Il en résulte, également, une avantageuse simplification de montage de ce coffret.

En effet, lors de la mise en place de sa porte, il suffit d'engager celle-ci par sa fourchette sur l'axe du dormant, sans l'intervention d'une quelconque broche.

Il est à souligner par ailleurs que, dans le brevet FR-A1-2 717 633 déjà mentionné ci-dessus, la partie des charnières équipant la porte du coffret en cause intervient pour l'essentiel sur la face interne de cette porte et non pas sur sa tranche.

Il en est de même dans le brevet GB-A-2 134 591, dans laquelle, de surcroît, si elles sont formées par des fourchettes, les parties de charnière correspondantes appartiennent aux charnières principales de la porte concernée et sont encliquetées en force sur des axes portés par le dormant auquel cette porte est articulée.

Au contraire, l'objet de la présente demande de brevet porte sur la mise en oeuvre d'une articulation supplémentaire entre les charnières principales de la porte concernée, et la fourchette formant cette articulation supplémentaire intervient sur la tranche de cette porte et s'engage librement, sans un quelconque encliquetage, sur l'axe prévu pour elle sur le dormant du coffret correspondant.

II en résulte avantageusement une grande simplicité de réalisation et de mise en oeuvre, et une grande efficacité.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un coffret suivant l'invention ;
la figure 2 est, à échelle supérieure, une vue en perspective éclatée de la porte de ce coffret et du dormant sur lequel cette porte est articulée ;
les figures 3 et 4 reprennent, à échelle supérieure, s'agissant de la porte, les détails de la figure 2 repérés par des encarts III et IV sur cette figure 2 ;
les figures 5 et 6 reprennent, à l'échelle des figures 3 et 4, mais s'agissant du dormant, les détails de la figure 2 repérés par des encarts V et VI sur cette figure 2 ;
les figures 7 et 8 sont, à échelle encore supérieure, des vues partielles en coupe transversale de la porte, suivant chacune respectivement les lignes VII-VII et VIII-VIII de la figure 4 ;
la figure 9 est, à l'échelle des figures 7 et 8, une vue partielle en coupe transversale du dormant, suivant les lignes IX-IX de la figure 5 ;
les figures 10A, 10B sont, déduites des figures 7 et 9, des vues partielles en coupe transversale illustrant deux phases successives de montage de la porte sur le dormant ;
la figure 11 est une vue partielle en coupe axiale analogue à celles des figures 10A, 10B, pour la position de fermeture de la porte.

Tel qu'illustré sur ces figures, et de manière connue en soi, le coffret 10 suivant l'invention comporte une porte 11 articulée par des gonds 12 à un dormant 13 solidaire de son corps 14.

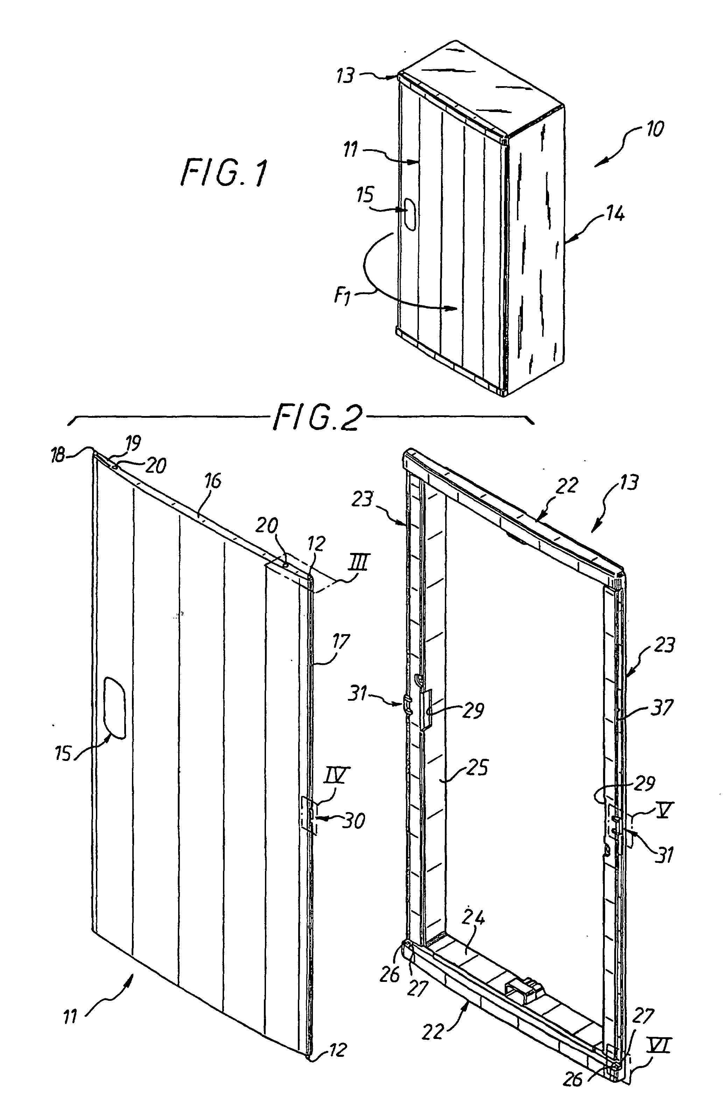

Dans la forme de réalisation représentée, l'ouverture de la porte 11 se fait de la gauche vers la droite, suivant la flèche F1 de la figure 1.

Les gonds 12 s'étendent donc aux extrémités du côté vertical de droite de cette porte 11.

Conjointement, à proximité de son côté vertical de gauche, la porte 11 est équipée d'une poignée 15.

Cette poignée 15 ne relevant pas de la présente invention, elle ne sera pas décrite ici.

Il peut lui être associé une serrure, non représentée.

Dans la forme de réalisation représentée, la porte 11 est légèrement cintrée, suivant un axe vertical, et, en saillie sur sa surface interne, elle présente, en continu, un bord tombé 16 le long de chacun de ses côtés horizontaux et un bord tombé 17 le long de chacun de ses côtés verticaux.

Les bords tombés 16 sont plats tandis que, en ce qui concerne, au moins, leur surface extérieure, les bords tombés 17 sont largement arrondis.

Dans la forme de réalisation représentée, les gonds 12 sont d'un seul tenant avec la porte 11, et, en correspondance l'un avec l'autre, ils font saillie au voisinage de l'extrémité concernée des bords tombés 16, c'est-à-dire à l'extrémité de ces bords tombés 16 opposée à la poignée 15.

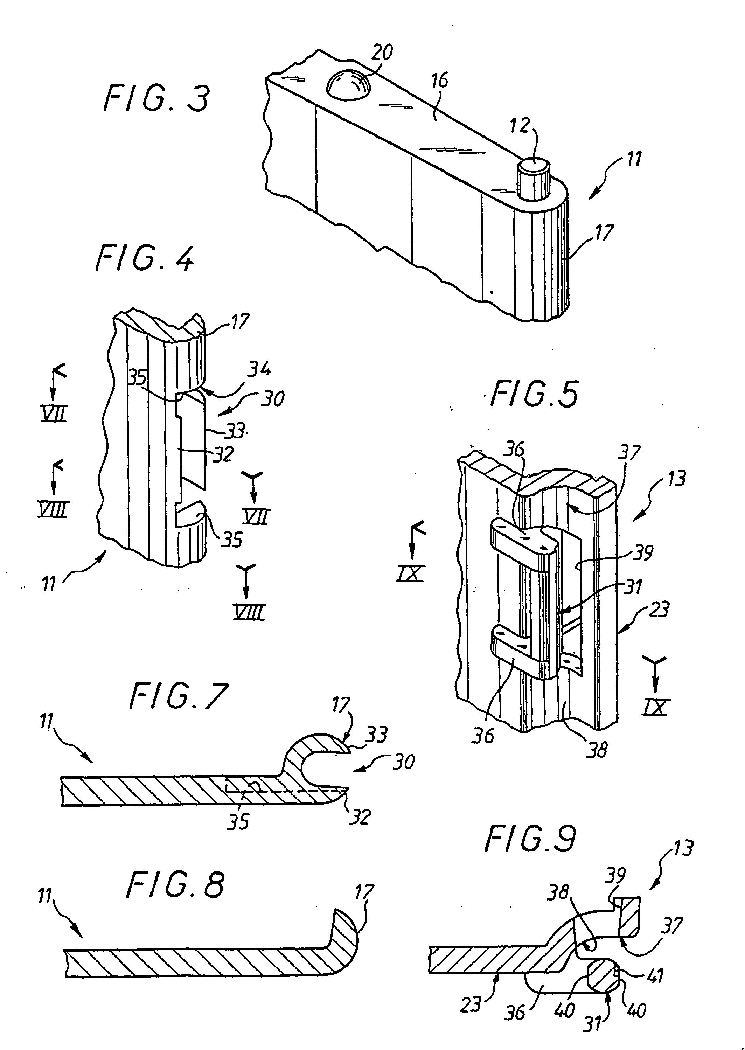

Tel qu'il est mieux visible pour l'un d'eux sur la figure 3, les gonds 12 sont de simples pions cylindriques.

Leur extrémité libre peut être plate, comme représenté sur la figure 3.

Mais elle peut également être arrondie en demi-sphère.

En outre, pour faciliter un éventuel dégondage de la porte 11, l'un au moins des gonds 12 peut intervenir en bout d'une languette élastiquement déformable, non représentée, suivant des dispositions du type de celles décrites dans le brevet FR-A1-2 663 495.

Dans la forme de réalisation représentée, il est prévu, en saillie, à l'autre extrémité des bords tombés 16, c'est-à-dire à l'extrémité de ces bords tombés 16 située du côté de la poignée 15, au lieu et place d'un gond 12, un plot 18, qui est destiné à permettre, par encliquetage, un maintien en position de fermeture de la porte 11 dans le dormant 13, et qui, par exemple, et tel que représenté, intervient en bout d'une languette élastiquement déformable 19.

Enfin, dans la forme de réalisation représentée, il est prévu, à distance de chacune des extrémités des bords tombés 16, un bossage 20, qui, en saillie, lui aussi, sur un tel bord tombé 16, est destiné, lui, à permettre un centrage en position de fermeture de la porte 11 dans le dormant 13.

Par exemple, et tel que représenté, ce bossage 20 est arrondi en demi-sphère.

Préférentiellement, la porte 11 est en matière synthétique, dite plastique, et elle est réalisée par moulage.

Il en est de même, dans la forme de réalisation représentée, pour le dormant 13.

En forme générale de cadre, ce dormant 13 comporte deux traverses 22, qui s'étendent en principe horizontalement, et deux montants 23, qui, eux, s'étendent en principe verticalement.

Pour sa solidarisation au corps 14, il comporte, en continu, autour de sa périphérie interne, un bord tombé 24 le long de chacune de ses traverses 22 et un bord tombé 25 le long de chacun de ses montants 23.

Pour l'articulation de la porte 11, le dormant 13 présente un perçage 26 à chacune des extrémités de ses traverses 22.

Dans la forme de réalisation représentée, ce perçage 26 est entouré, sur une moitié de son périmètre, par un bossage 27, figure 6, et, en positions diamétralement opposées l'une par rapport à l'autre, ce bossage 27 comporte deux prolongements 28, qui encadrent le perçage 26, et qui sont chacun biseautés par un chanfrein.

A l'une des extrémités des traverses 22, les perçages 26 coopèrent en emboîtement avec les gonds 12 de la porte 11, et, à l'autre des extrémités des traverses 22, ils coopèrent en emboîtement avec les plots 18 de celle-ci.

Pour l'intervention éventuelle du pêne d'une serrure, le dormant 13 comporte, par ailleurs, sur chacun de ses montants 23, une ouverture 29, formant gâche, qui s'étend pour l'essentiel sur le bord tombé 25 correspondant.

Suivant l'invention, la porte 11 présente, d'un seul tenant, sur sa tranche, entre les gonds 12, une fourchette 30 par laquelle elle est en prise à rotation avec un axe 31 qui est lui-même d'un seul tenant avec le dormant 13.

Dans la forme de réalisation représentée, la porte 11 ne comporte qu'une fourchette 30 entre ses gonds 12, et cette fourchette 30 intervient sensiblement à mi-hauteur entre ces derniers, à niveau avec la poignée 15.

Un changement éventuel du sens d'ouverture de la porte 11 impliquant un retournement de 180° de cette porte 11 dans son plan, il n'est prévu une fourchette 30 que sur l'un de ses côtés verticaux.

Mais, ainsi qu'il est visible sur la figure 2, le dormant 13 présente, en correspondance, un axe 31 sur chacun de ses montants 23.

Dans la forme de réalisation représentée, la fourchette 30 que présente la porte 11 comporte, sensiblement parallèlement l'un à l'autre, deux doigts 32, 33, figures 4 et 7, à savoir, d'une part, un doigt externe 32, qui est formé par la porte 11 elle-même, et dont la surface externe est donc sensiblement en continuité avec la surface externe de cette porte 11, et, d'autre part, un doigt interne 33, qui, lui, est en saillie sur la surface interne de la porte 11.

En pratique, le doigt interne 33 s'étend à la faveur d'une échancrure 34 qui interrompt localement le bord tombé 17 correspondant de la porte 11.

Pour des raisons qui apparaîtront ultérieurement, deux saignées 35 interviennent chacune respectivement de part et d'autre de ce doigt interne 33, entre celui-ci et les bords latéraux correspondants de l'échancrure 34.

Dans la forme de réalisation représentée, ces saignées 35 mordent légèrement sur la surface interne de la porte 11, en délimitant dans celle-ci le doigt externe 32.

Dans la forme de réalisation représentée, la fourchette 30 présente, intérieurement, un fond borgne hémicylindrique et deux flancs latéraux qui, sensiblement parallèles l'un à l'autre, vont cependant en s'écartant légèrement l'un de l'autre en s'éloignant du fond borgne.

Sa concavité est globalement orientée parallèlement à la porte 11, ou, plus précisément, parallèlement au plan général moyen de cette porte 11.

Prise dans son ensemble, la fourchette 30 que présente la porte 11 vient de moulage avec celle-ci.

Ainsi qu'on le notera, cette fourchette 30 s'étend tout entière dans le contour hors tout de la porte 11, et, de l'avant, elle est quasi invisible.

Elle n'est apparente que vue de côté, et elle ne modifie donc pas sensiblement l'esthétique de l'ensemble.

Les deux axes 31 que présente en correspondance le dormant 13 ont des constitutions identiques l'un à l'autre, et ils sont symétriques l'un de l'autre par rapport à un plan vertical qui, passant par le milieu des traverses 22, est perpendiculaire à celles-ci.

Ils ont chacun une hauteur au moins égale à celle de la fourchette 30, et, de préférence, légèrement supérieure à cette dernière.

Dans la forme de réalisation représentée, chacun de ces deux axes 31 se rattache au dormant 13 par deux pattes 36, qui, parallèles l'une à l'autre, interviennent chacune respectivement à ses deux extrémités.

En pratique, les deux pattes 36 portant ainsi un axe 31 font saillie sur le dormant 13, et c'est pour leur passage que la porte 11 présente, en correspondance, du côté de sa surface interne, deux saignées 35.

Dans la forme de réalisation représentée, le dormant 13 présente, sur chacun de ses montants 23, pour l'engagement du bord tombé 17 correspondant de la porte 11, un décrochement 37, et le fond 38 de ce décrochement 37 a, en section transversale, un contour dont une partie au moins est circulaire.

Par exemple, et tel que représenté, ce fond 38 est d'abord circulaire en quart de cercle, puis plan, en étant alors parallèle à la porte 11, figures 5 et 9.

Chacun des axes 31 s'étend localement en porte à faux au droit du décrochement 37 correspondant.

Plus précisément, les pattes 36 portant un tel axe 31 se raccordent au dormant 13 à distance de la périphérie externe de celui-ci, à la naissance du décrochement 37 correspondant, et elles s'étendent en direction de cette périphérie externe.

En pratique, chacun des axes 31 est centré par rapport à la partie circulaire du contour de la section transversale du fond 38 du décrochement 37 concerné.

Les axes 31, et les pattes 36 qui les portent, viennent de moulage avec le dormant 13.

De ce fait, au droit de chacun des axes 31, le dormant 13 présente, dans son décrochement 37 correspondant, un évidement 39, qui, traversant de part en part ce décrochement 37, est propre au moulage d'un tel axe 31.

Pour faciliter, également, ce moulage, chacun des axes 31 présente, en positions diamétralement opposées l'une par rapport l'autre, dans la forme de réalisation représentée, deux méplats 40, qui, sensiblement parallèles l'un à l'autre, sont sensiblement perpendiculaires au plan général du dormant 13, avec, en creux sur celui de ces méplats 40 qui est tourné du côté de la périphérie externe du dormant 13, un décrochement 41.

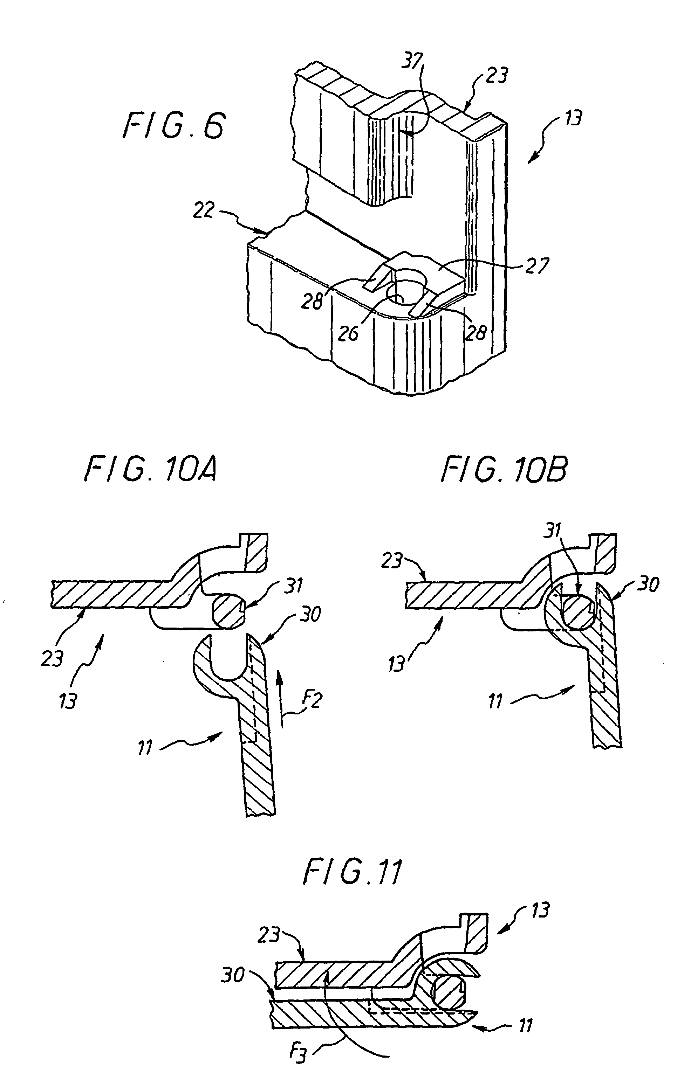

Pour sa mise en place sur le dormant 13, la porte 11 est présentée sensiblement perpendiculairement au plan général de celui-ci, tel que représenté sur la figure 10A.

Par sa fourchette 30, elle est ensuite engagée sur l'axe 31 correspondant du dormant 13, suivant la flèche F2 de la figure 10A, jusqu'à ce que, par encliquetage, les gonds 12 correspondants viennent en prise avec les perçages 26 prévus à cet effet sur le dormant 13.

La fourchette 30 de la porte 11 est alors en prise avec l'axe 31 concerné du dormant 13, comme représenté à la figure 10B.

La porte 11 peut alors être fermée.

Il suffit, pour ce faire, de la rabattre contre le dormant 13, suivant la flèche F3 de la figure 10C.

En variante, il peut être prévu plusieurs fourchettes sur la hauteur de la porte, avec, en correspondance, un nombre égal d'axes sur le dormant.

## Revendications

1. Coffret du genre comportant une porte (11) articulée par des gonds (12) à un dormant (13), **caractérisé en ce que**, entre les gonds (12), la porte (11) présente, d'un seul tenant, sur sa tranche, au moins une fourchette (30) par laquelle elle est en prise à rotation avec un axe (31) qui est lui-même d'un seul tenant avec le dormant (13).

2. Coffret suivant la revendication 1, **caractérisé en ce que** la fourchette (30) comporte, sensiblement parallèlement l'un à l'autre, deux doigts (32, 33), à savoir, un doigt externe (32), dont la surface externe est sensiblement en continuité avec la surface externe de la porte (11), et un doigt interne (33), qui est en saillie sur la surface interne de la porte (11).

3. Coffret suivant la revendication 2, **caractérisé en ce que**, la porte (11) présentant un bord tombé (17), le doigt interne (33) de la fourchette (30) s'étend à la faveur d'une échancrure (34) qui interrompt localement ce bord tombé (17).

4. Coffret suivant l'une quelconque des revendications 1 à 3, **caractérisé en ce que** la fourchette (30) s'étend tout entière dans le contour hors tout de la porte (11).

5. Coffret suivant l'une quelconque des revendications 1 à 4, **caractérisé en ce que** la concavité de la fourchette (30) est globalement orientée parallèlement à la porte (11).

6. Coffret suivant l'une quelconque des revendications 1 à 5, **caractérisé en ce que**, une seule fourchette (30) étant prévue, cette fourchette (30) intervient à mi-hauteur de la porte (11).

7. Coffret suivant l'une quelconque des revendications 1 à 6, **caractérisé en ce que** la fourchette (30) que présente la porte (11) vient de moulage avec celle-ci.

8. Coffret suivant l'une quelconque des revendications 1 à 7, **caractérisé en ce que** l'axe (31) que présente le dormant (13) se rattache à celui-ci par deux pattes (36) qui interviennent chacune respectivement à ses deux extrémités.

9. Coffret suivant les revendications 3 et 8, prises conjointement, **caractérisé en ce que**, pour le passage des pattes (36) portant l'axe (31), la porte (11) présente, en correspondance, du côté de sa surface interne, deux saignées (35) qui interviennent chacune respectivement de part et d'autre du doigt interne (33) de la fourchette (30).

10. Coffret suivant les revendications 3 et 8, prises conjointement, **caractérisé en ce que**, le dormant (13) présentant un décrochement (37) pour l'engagement du bord tombé (17) de la porte (11), l'axe (31) s'étend localement en porte à faux au droit de ce décrochement (37).

11. Coffret suivant la revendication 10, **caractérisé en ce que** les pattes (36) portant l'axe (31) se raccordent au dormant (13) à distance de la périphérie externe de celui-ci et s'étendent en direction de cette périphérie externe.

12. Coffret suivant l'une quelconque des revendications 10, 11, **caractérisé en ce que** le fond (38) du décrochement (37) du dormant (13) a, en section transversale, un contour dont une partie au moins est circulaire, et l'axe (31) est centré par rapport à la partie circulaire de ce contour.

13. Coffret suivant l'une quelconque des revendications 1 à 12, **caractérisé en ce que** l'axe (31) que présente le dormant (13) vient de moulage avec celui-ci.

14. Coffret suivant les revendications 10 et 13, prises conjointement, **caractérisé en ce que**, au droit de l'axe (31), le dormant (13) présente, dans son décrochement (37), un évidement (39) propre au moulage de cet axe (31).

15. Coffret suivant l'une quelconque des revendications 1 à 14, **caractérisé en ce que** le dormant (13) présente un axe (31) sur chacun de ses deux montants (23).

## Claims

1. A cabinet of the kind comprising a door (11) mounted pivotably by pins (12) to a frame (13) **characterised in that** between the pins (12) the door (11) has in one piece on its edge at least one fork (30) by way of which it is rotatably engaged with a shaft (31) which is itself in one piece with the frame (13).

2. A cabinet according to claim 1 **characterised in that** the fork (30) comprises two fingers (32, 33) substantially in mutually parallel relationship, namely an external finger (32) of which the external surface is substantially in a condition of continuity with the external surface of the door (11) and an internal finger (33) which is in projecting relationship on the internal surface of the door (11).

3. A cabinet according to claim 2 **characterised in that**, the door (11) having a turned edge (17), the internal finger (33) of the fork (30) extends by way of an aperture (34) which locally interrupts said turned edge (17).

4. A cabinet according to any one of claims 1 to 3 **characterised in that** the fork (30) extends entirely within the overall contour of the door (11).

5. A cabinet according to any one of claims 1 to 4 **characterised in that** the concavity of the fork (30) is generally oriented in parallel relationship with the door (11).

6. A cabinet according to any one of claims 1 to 5 **characterised in that**, a single fork (30) being provided, said fork (30) is operatively disposed at the mid-height position of the door (11).

7. A cabinet according to any one of claims 1 to 6 **characterised in that** the fork (30) with which the door (11) is provided is moulded therewith.

8. A cabinet according to any one of claims 1 to 7 **characterised in that** the shaft (31) with which the frame (13) is provided is attached thereto by two lugs (36) which are each disposed at respective ones of its two ends.

9. A cabinet according to claims 3 and 8 in combination **characterised in that**, for passing the lugs (36) carrying the shaft (31), the door (11) has in corresponding relationship on the side of its internal surface two grooves (35) which are each disposed on respective sides of the internal finger (33) of the fork (30).

10. A cabinet according to claims 3 and 8 in combination **characterised in that**, the frame (13) having an offset portion (37) for engagement of the turned edge (17) of the door (11), the shaft (31) extends locally in cantilever relationship in line with the offset portion (37).

11. A cabinet according to claim 10 **characterised in that** the lugs (36) carrying the shaft (31) are connected to the frame (13) at a distance from the external periphery thereof and extend in the direction of said external periphery.

12. A cabinet according to either one of claims 10 and 11 **characterised in that** the bottom (38) of the offset portion (37) of the frame (13) is of a contour in cross-section of which a part at least is circular and the shaft (31) is centered with respect to the circular part of said contour.

13. A cabinet according to any one of claims 1 to 12 **characterised in that** the shaft (31) with which the frame (13) is provided is moulded therewith.

14. A cabinet according to claims 10 and 13 in combination **characterised in that** in line with the shaft (31) the frame (13) has in its offset portion (37) an opening (39) suitable for moulding of said shaft (31).

15. A cabinet according to any one of claims 1 to 14 **characterised in that** the frame (13) has a shaft (31) on each of its two uprights (23).

## Patentansprüche

1. Gehäuse mit einer Tür (11), die über Türangeln (12) gelenkig an einer Zarge (13) gelagert ist, **dadurch gekennzeichnet, dass** die Tür zwischen den Türangeln (12) auf ihrem Rand zumindest eine einstückig ausgebildete Gabel (30) aufweist, über welche sie drehbar mit einer ihrerseits mit der Zarge (13) einstückig ausgebildeten Achse (31) in Eingriff steht.

2. Gehäuse nach Anspruch 1, **dadurch gekennzeichnet, dass** die Gabel (30) zwei im Wesentlichen zueinander parallele Finger (32, 33) aufweist, nämlich einen äußeren Finger (32), dessen äußere Oberfläche im Wesentlichen die äußere Oberfläche der Tür (11) fortsetzt, und einen inneren Finger (33), der über die innere Oberfläche der Türe (11) vorsteht.

3. Gehäuse nach Anspruch 2, **dadurch gekennzeichnet, dass** die Tür (11) einen abgewinkelten Rand (17) besitzt und der innere Finger (33) der Gabel (30) sich im Schutz einer Aussparung (34) erstreckt, die den abgewinkelten Rand (17) lokal unterbricht.

4. Gehäuse nach einem der Ansprüche 1 bis 3, **dadurch gekennzeichnet, dass** die Gabel (30) sich vollständig innerhalb der insgesamt betrachteten Außenkontur der Tür (11) erstreckt.

5. Gehäuse nach einem der Ansprüche 1 bis 4, **dadurch gekennzeichnet, dass** die Aushöhlung der Gabel (30) im Wesentlichen parallel zu der Tür (11) ausgerichtet ist.

6. Gehäuse nach einem der Ansprüche 1 bis 5, **dadurch gekennzeichnet, dass** eine einzige Gabel (30) vorgesehen ist und diese sich auf halber Höhe der Tür (11) befindet.

7. Gehäuse nach einem der Ansprüche 1 bis 6, **dadurch gekennzeichnet, dass** die Gabel (30), welche die Tür (11) aufweist, mit dieser gegossen ist.

8. Gehäuse nach einem der Ansprüche 1 bis 7, **dadurch gekennzeichnet, dass** die Achse (31), welche die Zarge (13) aufweist, an dieser über zwei Laschen (36) befestigt ist, die jeweils an den beiden Enden der Achse (31) vorgesehen sind.

9. Gehäuse nach den Ansprüchen 3 und 8 zusammengenommen, **dadurch gekennzeichnet, dass** die Tür (11) für den Durchgang der die Achse (31) tragenden Laschen (36) dazu korrespondierend auf der Seite ihrer inneren Oberfläche zwei Einschnitte (35) aufweist, die beidseitig des inneren Fingers (33) der Gabel (30) angeordnet sind.

10. Gehäuse nach den Ansprüchen 3 und 8 zusammengenommen, **dadurch gekennzeichnet, dass** die Zarge (13) eine Ausbuchtung (37) zur Aufnahme des abgewinkelten Randes (17) der Tür (11) aufweist, wobei die Achse (31) sich stellenweise gerade vorspringend gegenüber dieser Ausbuchtung (37) erstreckt.

11. Gehäuse nach Anspruch 10, **dadurch gekennzeichnet, dass** die Laschen (36), welche die Achse (31) tragen, von dem Außenrand der Zarge (13) beabstandet an dieser befestigt sind und sich in Richtung dieses Außenrandes erstrecken.

12. Gehäuse nach einem der Ansprüche 10, 11, **dadurch gekennzeichnet, dass** der Boden (38) der Ausbuchtung (37) der Zarge (13) im Querschnitt eine Kontur besitzt, von der zumindest ein Teil kreisförmig ist, und die Achse (31) in Bezug auf den kreisförmigen Teil dieser Kontur zentriert ist.

13. Gehäuse nach einem der Ansprüche 1 bis 12, **dadurch gekennzeichnet, dass** die Achse (31), welche die Zarge (13) aufweist, mit dieser gegossen ist.

14. Gehäuse nach den Ansprüche 10 und 13 zusammengenommen, **dadurch gekennzeichnet, dass** die Zarge (13) gegenüber der Achse (31) in ihrer Ausbuchtung (37) eine Aussparung (39) aufweist, welche zum Gießen dieser Achse (31) dient.

15. Gehäuse nach einem der Ansprüche 1 bis 14, **dadurch gekennzeichnet, dass** die Zarge (13) auf jeder ihrer beiden Seiten (23) eine Achse (31) aufweist.
